# EUROPEAN PATENT APPLICATION

(11) **EP 2 371 579 A1**
(43) Date of publication of application: **05.10.2011**
(21) Application number: 09831732.4
(22) Date of filing: 11.12.2009
(51) Int. Cl.: B60B 3/02, B21K 1/32, B60B 3/12, B60B 21/00

(54) **WHEEL AND METHOD OF MANUFATURING THEREOF**

(30) Priority: 11.12.2008 JP 2008316303
(71) Applicant: Washi Beam Co., Ltd., Fukui 910-0004 (JP)
(72) Inventor: ONO, Kotaro, Fukui-shi Fukui 910-0004 (JP); MOCHIKAWA, Akiji, Takaoka-shi Toyama 933-0313 (JP)
(74) Representative: Goddar, Heinz J.
(86) International application number: PCT/JP2009/006824
(87) International publication number: WO 2010/067626

(57) **Abstract**

There are provided a wheel having excellent mechanical strength in spite of being lightweight, and a method of manufacturing the wheel. The present invention provides a wheel (100) including a disk portion (6), an outer rim portion (7), and an inner rim portion (8). The wheel (100) includes an aluminum portion (22) made of an aluminum alloy and a magnesium portion (21) made of a magnesium alloy, with the aluminum portion and magnesium portion being integrated by joining utilizing forging.

## Description

### TECHNICAL FIELD

The present invention relates to a wheel and a method of manufacturing the same and, more particularly, to a wheel which has excellent mechanical strength in spite of being lightweight, and a method of manufacturing the same.

### BACKGROUND ART

In general, automotive tires include metal wheels as support members. Recently, such wheels have been required to achieve a reduction in weight and high design quality as much as possible.

There has been developed a method of manufacturing such a wheel by, for example, forging and pressing, with a die, a billet obtained by cutting an aluminum alloy round bar manufactured by casting (see, for example, patent literature 1).
In addition, an automotive wheel is known, which is formed from a recrystallized magnesium alloy obtained by plastic deformation of a cast magnesium alloy (see, for example, patent literature 2).
These wheels each are obtained from billets which have been cast (to be referred to as "cast billets" hereinafter) by shaping utilizing forging.

### PRIOR ART DOCUMENTS

### PATENT LITERATURES

Patent Literature 1: Japanese Unexamined Patent Application Publication No. 2007-210017
Patent Literature 2: Japanese Unexamined Patent Application Publication No. 2007-308780

### SUMMARY OF THE INVENTION

### PROBLEMS THAT THE INVENTION IS TO SOLVE

However, the wheel disclosed in patent literature 1 described above is made of an aluminum alloy, and hence is heavy in weight, and cannot be said to be satisfactory in terms of handling properties and economic efficiency.
The wheel disclosed in patent literature 2 described above is made of a magnesium alloy, and hence is light in weight but insufficient in mechanical strength.

Assume that an aluminum alloy and a magnesium alloy are melted and fused together. In this case, the crystalline structure of aluminum is a face-centered cubic lattice structure, whereas the crystalline structure of magnesium is a hexagonal closest packing structure. This poses a problem in terms of fusibility. For this reason, the resultant structure tends to be more insufficient in mechanical strength than the structure using magnesium alone.

The present invention has been made in consideration of the above situation, and has as its object to provide a wheel which has excellent mechanical strength in spite of being lightweight, and a method of manufacturing the same.

### MEANS FOR SOLVING THE PROBLEMS

The present inventors have been dedicated to solve the above problems, and have found that it is possible to solve the above problems by providing an aluminum portion and a magnesium portion, thus completing the present invention.

That is, the present invention provides (1) a wheel which includes a disk portion, an outer rim portion, and an inner rim portion, comprising an aluminum portion made of an aluminum alloy and a magnesium portion made of a magnesium alloy, the aluminum portion and the magnesium portion being integrated by joining utilizing forging. Note that at least part of aluminum and magnesium portions may be integrated by joining utilizing forging.

According to the present invention, (2) in the wheel described in (1), an eutectic comprising aluminum and magnesium is formed on the interface between the aluminum portion and the magnesium portion.

According to the present invention, (3) in the wheel described in (1) or (2), a surface of the magnesium portion is enclosed by the aluminum portion.

According to the present invention, (4) in the wheel described in (1) or (2), one surface of the magnesium portion is covered with the aluminum portion.

According to the present invention, (5) in the wheel described in (1) or (2), the disk portion comprises a multilayer member formed from the aluminum portion and the magnesium portion, and an outer rim portion including an outer beat sheet portion and an outer flange portion and an inner rim portion including an inner beat sheet portion and an inner flange portion are magnesium portions, and the outer rim portion, the inner beat sheet portion, and the inner flange portion are covered with an aluminum portion.

According to the present invention, (6) in the wheel described in (1) or (2), the disk portion comprises the magnesium portion, and the outer rim portion including an outer beat portion and an outer flange portion and the inner rim portion including an inner beat sheet portion and an inner flange portion comprise the aluminum portion:

According to the present invention, (7) in the wheel described in (1) or (2), the disk portion is a multilayer member formed from the aluminum portion and the magnesium portion, the outer rim portion comprises the magnesium portion, and the inner rim portion comprises the aluminum portion.

According to the present invention, (8) in the wheel described in any one of (1) to (7), a particle size of metal crystal particles of at least one portion selected from the group consisting of the disk portion, the outer rim portion, and the inner rim portion is 5 µm to 40 µm.

According to the present invention, (9) in the wheel described in any one of (1) to (8), the disk portion, the outer rim portion, and the inner rim portion are integral.

The present invention provides (10) a wheel manufacturing method of shaping utilizing forging a composite billet into a wheel including an aluminum portion made of an aluminum alloy and a magnesium portion made of a magnesium alloy, in which the composite billet has a structure in which a columnar magnesium billet made of a magnesium alloy is contained in a closed-end cylindrical aluminum billet made of a pair of opposing aluminum alloys.

The present invention provides (11) a wheel manufacturing method of shaping utilizing forging a composite billet into a wheel including an aluminum portion made of an aluminum alloy and a magnesium portion made of a magnesium alloy, in which the composite billet has a structure in which a disk-like aluminum billet made of an aluminum alloy is stacked on a disk-like magnesium billet made of a magnesium alloy.

The present invention provides (12) a wheel manufacturing method of shaping utilizing forging a composite billet into a wheel including an aluminum portion made of an aluminum alloy and a magnesium portion made of a magnesium alloy, in which the composite billet has a structure in which a columnar magnesium billet made of a magnesium alloy is contained in a cylindrical aluminum billet made of an aluminum alloy.

The present invention provides (13) a wheel manufacturing method of shaping utilizing forging a composite billet into a wheel including an aluminum portion made of an aluminum alloy and a magnesium portion made of a magnesium alloy, in which the composite billet has a structure in which a columnar magnesium billet made of a magnesium alloy is contained in a closed-end cylindrical aluminum billet made of an aluminum alloy.

The present invention provides (14) a wheel manufacturing method of shaping utilizing forging a composite billet into a wheel including an aluminum portion made of an aluminum alloy and a magnesium portion made of a magnesium alloy, in which the composite billet has a structure in which a stepped columnar magnesium billet made of a magnesium alloy is fitted in a closed-end cylindrical aluminum billet made of an aluminum alloy so as to have a flat side surface.

The present invention provides (15) a wheel manufacturing method of shaping utilizing forging a composite billet into a wheel including an aluminum portion made of an aluminum alloy and a magnesium portion made of a magnesium alloy, in which the composite billet has a structure in which a stepped columnar magnesium billet made of a magnesium alloy is fitted in a closed-end cylindrical aluminum billet made of an aluminum alloy, and a ring-like aluminum billet is fitted on the magnesium billet so as to have a flat side surface.

According to the present invention, (16) in the wheel manufacturing method described in any one of (10) to (15), a particle size of metal crystal particles of the wheel is 5 µm to 40 µm.

According to the present invention, (17) in the wheel manufacturing method described in any one of (10) to (16), a surface of the aluminum billet with which the magnesium billet is brought into contact has a surface roughness (Ry) of not more than 10 µm, and a surface of the magnesium billet with which the aluminum billet is brought into contact has a surface roughness (Ry) of not more than 10 µm.

According to the present invention, (18) in the wheel manufacturing method described in any one of (10) to (17), a thin film made of a metal other than aluminum and magnesium is interposed between the aluminum billet and the magnesium billet.

According to the present invention, (19) in the wheel manufacturing method described in any one of (10) to (18), the shaping utilizing forging is performed at a temperature not less than 300°C and a pressure of 9.8 x 10³ kN to 88.2 x 10³ kN.

According to the present invention, (20) in the wheel manufacturing method described in any one of (10) to (19), the aluminum billet and/or the magnesium billet is a forged billet.

The present invention provides (21) a wheel manufactured by a manufacturing method defined in any one of (10) to (20).

### ADVANTAGE OF THE INVENTION

The wheel of the present invention includes the aluminum portion made of the aluminum alloy and the magnesium portion made of the magnesium alloy which are joined by forging together, and hence can achieve a reduction in weight owing to the magnesium portion, and can also improve the mechanical strength owing to the aluminum portion.
It is therefore possible to provide a wheel having excellent mechanical strength in spite of being lightweight.

The above wheel can greatly improve the joint strength between the aluminum portion and the magnesium portion by forming the eutectic made of aluminum and magnesium on the interface between the aluminum portion and the magnesium portion.

The above wheel can suppress the corrosion of the magnesium portion when the surface of the magnesium portion is enclosed or covered with the aluminum portion. This makes the wheel have excellent durability.

The above wheel further improves in mechanical strength when the particle size of metal crystal particles of at least one portion selected from the group consisting of the disk portion, the outer rim portion, and the inner rim portion is 5 µm to 40 µm. In addition, the disk portion, the outer rim portion, and the inner portion are preferably integrated with each other.

The wheel manufacturing method according to the present invention forging-shapes a composite billet in which a columnar magnesium billet made of a magnesium alloy is contained in a closed-end cylindrical aluminum billet made of a pair of opposing aluminum alloys, a composite billet in which a disk-like aluminum billet made of an aluminum alloy is stacked on a disk-like magnesium billet made of a magnesium alloy, a composite billet in which a columnar magnesium billet made of a magnesium alloy is contained in a cylindrical aluminum billet made of an aluminum alloy, a composite billet in which a columnar magnesium billet made of a magnesium alloy is contained in a closed-end cylindrical aluminum billet made of an aluminum alloy, a composite billet in which a stepped columnar magnesium billet made of a magnesium alloy is fitted in a closed-end cylindrical aluminum billet made of an aluminum alloy so as to have a flat side surface, or a composite billet in which a stepped columnar magnesium billet made of a magnesium alloy is fitted in a closed-end cylindrical aluminum billet made of an aluminum alloy, and a ring-like aluminum billet is fitted on the magnesium billet so as to have a flat side surface. The obtained wheel can reduce in weight owing to the magnesium billet, and can improve the mechanical strength owing to the aluminum billet.
It is therefore possible to provide a wheel having excellent mechanical strength in spite of being lightweight.

In the above wheel manufacturing method, it is possible to further improve the joint strength between the aluminum portion and the magnesium portion when a surface of the aluminum billet with which the magnesium billet is brought into contact has a surface roughness (Ry) of 10 µm or less, and a surface of the magnesium billet with which the aluminum billet is brought into contact has a surface roughness (Ry) of 10 µm or less.

In the above wheel manufacturing method, when a thin metal film or powder is interposed between the aluminum billet and the magnesium billet, an eutectic can be formed even at a relatively low temperature. That is, the processing conditions can be eased.

In the above wheel manufacturing method, when the aluminum billet and/or the magnesium billet are billets forged in advance, it is possible to further improve the mechanical strength.

### BRIEF DESCRIPTION OF THE DRAWINGS

Fig. 1 is a front view showing the first embodiment of a wheel according to the present invention;
Fig. 2(a) is a sectional view taken along a line I - I' in Fig. 1, and Fig. 2(b) is an enlarged sectional view of a portion P in Fig. 2(a);
Fig. 3 is a schematic view showing a manufacturing process in a method of manufacturing a wheel according to the first embodiment;
Fig. 4 is a state graph showing the relationship between the temperatures and ratios of aluminum and magnesium;
Fig. 5(a) is a sectional view showing the second embodiment of the wheel according to the present invention, and Fig. 5(b) is a sectional view showing a composite billet in a method of manufacturing a wheel according to the second embodiment;
Fig. 6(a) is a sectional view showing the third embodiment of the wheel according to the present invention, and Fig. 6(b) is a sectional view showing a composite billet in a method of manufacturing a wheel according to the third embodiment;
Fig. 7(a) is a sectional view showing the fourth embodiment of the wheel according to the present invention, and Fig. 7(b) is a sectional view showing a composite billet in a method of manufacturing a wheel according to the fourth embodiment;
Fig. 8(a) is a sectional view showing the fifth embodiment of the wheel according to the present invention, and Fig. 8(b) is a sectional view showing a composite billet in a method of manufacturing a wheel according to the fifth embodiment;
Fig. 9(a) is a sectional view showing the sixth embodiment of the wheel according to the present invention, and Fig. 9(b) is a sectional view showing a composite billet in a method of manufacturing a wheel according to the sixth embodiment;
Fig. 10 is a graph showing the relationship between the relationship between temperature conditions for joining utilizing forging and the average values of the tensile strengths of joined by forging portions in this embodiment; and
Fig. 11 is a view showing an electron micrograph of an eutectic obtained in the ninth embodiment.

### BEST MODE FOR CARRYING OUT THE INVENTION

The preferred embodiments of the present invention will be described in detail below with reference to the accompanying drawings as needed. The same reference numerals denote the same elements throughout the drawings, and a repetitive description will be omitted. Assume that the positional relationships between the components in, for example, the vertical and horizontal directions will be based on the positional relationships shown in the accompanying drawings unless otherwise specified. In addition, the dimensional ratios in the accompanying drawings are not limited to those shown in the drawings.

### [First Embodiment]

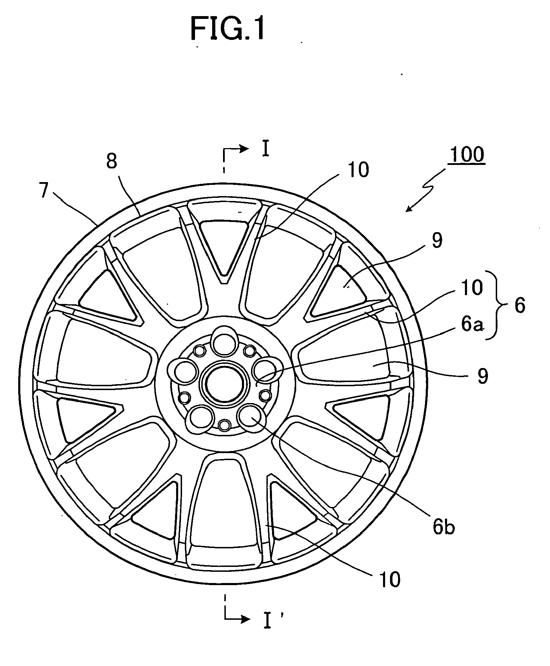

Fig. 1 is a front view showing the first embodiment of a wheel according to the present invention.
As shown in Fig. 1, a wheel 100 according to the first embodiment includes a disk portion 6, an outer rim portion 7 which is coupled to the circumference of the disk portion 6 and extends in the plane direction of the disk portion 6, and an inner rim portion 8 which is coupled to the circumference of the disk portion 6 and extends vertically in the direction perpendicular to the surface of the disk portion 6.
In addition, the disk portion 6 includes a disk-like hub portion 6a and spoke portions 10 radially extending from the hub portion 6a in a Y shape. That is, in the wheel 100 described above, the outer rim portion 7 and the inner rim portion 8 are coupled to the distal ends of the spoke portions 10. Note that the outer rim portion 7 has an outer beat sheet portion and outer flange portion (not shown). The inner rim portion 8 has an inner beat sheet portion and inner flange portion (not shown).

The hub portion 6a has a disk-like shape having a gradually curved surface, and is provided with bulb holes 6b to allow the insertion of bolts when the wheel 100 is fixed to a wheel axle with the bolts. Holes 9 are provided between the adjacent spoke portions 10.

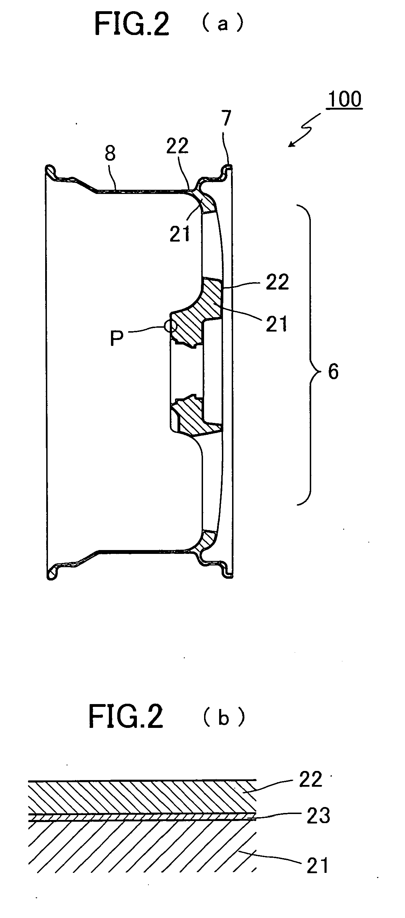

Fig. 2(a) is a sectional view taken along a line I - I' in Fig. 1.
As shown in Fig. 2(a), the disk portion 6, outer rim portion 7, and inner rim portion 8 of the wheel 100 according to the first embodiment each have an aluminum portion 22 made of an aluminum alloy and a magnesium portion 21 made of a magnesium alloy. The aluminum portion 22 and the magnesium alloy are joined by forging together.

As described above, since the wheel 100 according to the first embodiment includes the aluminum portion 22 made of an aluminum alloy and the magnesium portion 21 made of a magnesium alloy which are joined by forging together, it is possible to achieve a reduction in weight owing to the magnesium portion 21 and improve the mechanical strength owing to the aluminum portion 22.
It is therefore possible to provide a wheel having excellent mechanical strength in spite of being lightweight.

In addition, the surface of the magnesium portion 21 is enclosed by the aluminum portion 22, and the aluminum portion 22 and the magnesium portion 21 are joined by forging together.
In the above wheel 100, therefore, enclosing the surface of the magnesium portion 21 with the aluminum portion 22 will shield the magnesium portion 21 against ambient air and reliably suppress corrosion of the magnesium portion 21. This makes the wheel have excellent durability.

Fig. 2(b) is an enlarged sectional view of a portion P in Fig. 2(a).
As shown in Fig. 2(b), an eutectic 23 of aluminum and magnesium is formed on the interface between the aluminum portion 22 and the magnesium portion 21 by heat and pressure at the time of forging.

In this case, the eutectic 23 means a mixture in a fine crystalline state, which is obtained by softening or fusing two components and precipitating them together on the interface. This indicates that in the wheel 100 described above, an aluminum alloy and a magnesium alloy are melted and precipitated together on their interface to form a mixture in a fine crystalline state.

In the wheel 100 described above, the aluminum portion 22 is joined to the magnesium portion 21 by being joined by forging by pressure welding (joining by interfusion of atoms between metals in contact).
At the same time, fusion joining (joining by eutectic reaction between metals in contact) proceeds. This forms an eutectic.

The eutectic 23 is formed on the interface between the aluminum portion 22 and the magnesium portion 21. In this case, the tensile strengths of the interface between the aluminum portion 22 and magnesium portion 21 is preferably 30 MPa or more, and more preferably 40 MPa or more.

In the wheel 100 described above, the particle size of metal crystal particles of at least one portion selected from the group consisting of the disk portion 6, the outer rim portion 7, and the inner rim portion 8 is preferably 5 µm to 40 µm, and more preferably 10 µm to 30 µm. In addition, the particle size of any of the disk portion 6, the outer rim portion 7, and the inner rim portion 8 is more preferably 5 µm to 40 µm, and further more preferably 10 µm to 30 µm.

In this case, the tensile strength of any part of the wheel 100 described above is preferably 30 MPa or more, and more preferably 40 MPa or more. Note that the tensile strengths are values measured according to JIS Z 2241.
The proof stress of any part of the wheel 100 described above is preferably 200 MPa or more. Note that the proof stresses are values measured according to JIS Z 2241.
The elasticity of any part of the wheel 100 described above is preferably 5% to 15%. Note that the elasticities are values measured according to JIS Z 2241.
The Brinell hardness of any part of the wheel 100 described above is preferably 60 to 70 HB, Note that the Brinell hardnesses are values measured according to JIS Z 2243.

The disk portion 6, outer rim portion 7, and inner rim portion 8 of the wheel 100 described above are preferably integral with each other. In this case, the mechanical strength of the wheel 100 further improves. Obviously, this eliminates the need of assembly, and hence provides excellent workability.

The disk portion 6, outer rim portion 7, and inner rim portion 8 of the wheel 100 described above each preferably have a grain flow. This further improves the mechanical strength of the wheel 100.
In this case, the grain flow indicates the line of the flow of metal crystal particles which is produced in the metallographic structure of a forged product. Note that such a grain flow is not always produced in a product in a forging process, but is produced when the product is compressed at a predetermined pressure.

A method of manufacturing the wheel 100 will be described next. The wheel 100 is obtained by shaping utilizing forging a composite billet 20 (starting material) using a die.

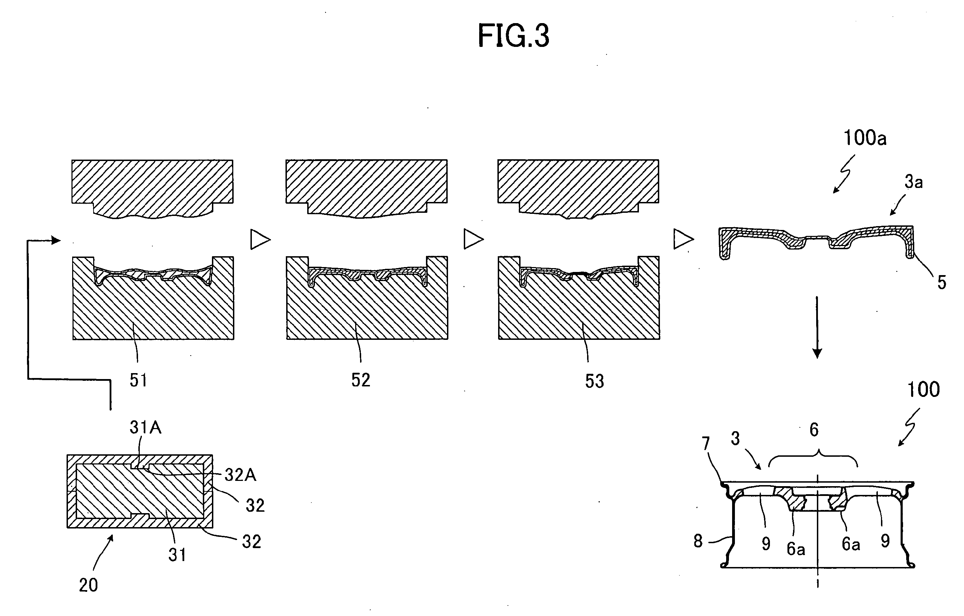

Fig. 3 is a schematic view showing a manufacturing process in a method of manufacturing a wheel according to the first embodiment.
The method of manufacturing the wheel 100 according to the first embodiment includes a shaping process utilizing forging and a finishing process, as shown in Fig. 3.
The shaping process utilizing forging includes a first shaping step utilizing forging 51, a second shaping step utilizing forging 52, and a third shaping step utilizing forging 53. That is, the composite billet 20 is formed into the wheel 100 through the first shaping step utilizing forging 51, the second shaping step utilizing forging 52, the third shaping step utilizing forging 53, and finishing process (not shown).

The composite billet 20 has a columnar magnesium billet 31 made of a magnesium alloy which is contained in a pair of opposing closed-end cylindrical aluminum billets 32 made of an aluminum alloy. That is, the magnesium billet 31 is contained between the pair of aluminum billets 32.
The wheel 100 with the surface of the magnesium portion being enclosed by the aluminum portion is formed by shaping utilizing forging the composite billet 20 in this embodiment.

The pair of the aluminum billets 32 each are provided with a convex portion 32a extending inward from an axial center portion of the bottom portion. The upper and lower surfaces of the magnesium billet 31 each are provided with a concave portion 31a at the axial center portion.
Fitting the convex portions 32a of the aluminum billets 32 in the concave portions 31a of the magnesium billet 31 allows easy positioning. In this positioned state, the aluminum billets 32 and the magnesium billet 31 are integrated into the wheel 100 through the first shaping step utilizing forging 51, the second shaping step utilizing forging 52, the third shaping step utilizing forging 53, and finishing process (not shown). Note that since the convex portions 32a of the aluminum billets 32 are fitted in the concave portions 31a of the magnesium billet 31, the aluminum billets 32 and the magnesium billet 31 are always processed in an integrated state in the first shaping step utilizing forging 51, second shaping step utilizing forging 52, third shaping step utilizing forging 53, and finishing process (not shown).

In the composite billet 20 described above, the surface roughness (Ry) of the surface of the aluminum billets 32 which is brought into contact with the magnesium billet 31 is preferably 10 µm or less, and the surface roughness (Ry) of the surface of the magnesium billet 31 which is brought into contact with the aluminum billets 32 is preferably 10 µm or less. In this case, the joint strength further improves.
In this case, the surface roughness (Ry) is a value measured according to JIS B 0601.

In above method of manufacturing the wheel, specific methods for the first shaping step utilizing forging 51, the second shaping step utilizing forging 52, and the third shaping step utilizing forging 53 include free forging, die forging, rocking die forging, extrusion forging, rotary forging, and closed-die forging (closed forging). Note that die forging includes press forging and hammer forging. It is also possible to use partial forging which repeats the operation of pressing part of the composite billet 20 upon rotating it through a predetermined angle.
Of these processes, the first shaping step utilizing forging 51, the second shaping step utilizing forging 52, and the third step shaping utilizing forging 53 each are preferably closed-die forging. In this case, it is possible to manufacture the wheel 100 with more uniform mechanical strength.

In addition, a process condition at this time may be any one of hot forging, warm forging, cold forging, isothermal forging, and the like.
Temperature conditions for these shaping processes utilizing forging are preferably eutectic temperatures which allow shaping utilizing forging and the formation of eutectics. More specifically, these temperatures are preferably 300°C or more, more preferably 300°C to 500°C, and still more preferably 420°C to 440°C.
Setting excessively high temperature conditions may melt a magnesium alloy and an aluminum alloy and fail to maintain the shape unlike a case in which temperature conditions fall within the above ranges. In contrast, setting excessively low temperature conditions will lead to the difficulty in obtaining an eutectic unlike a case in which temperature conditions fall within the above ranges.

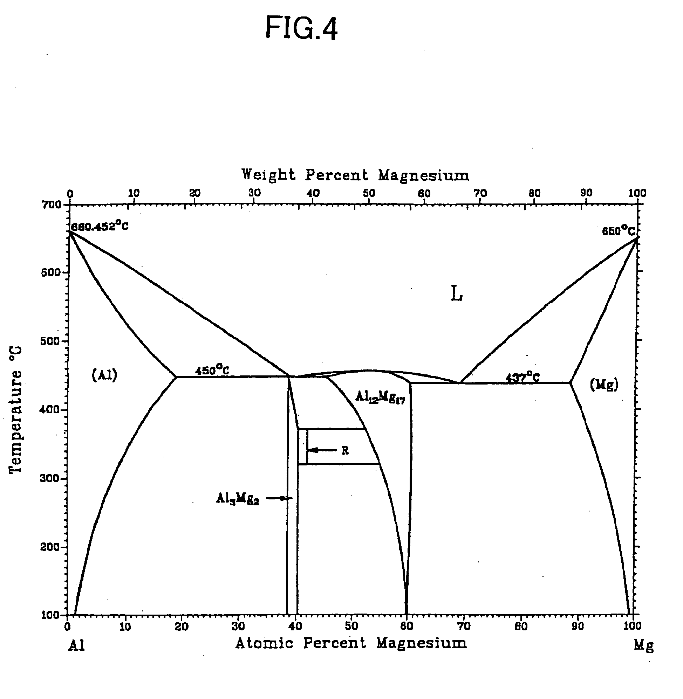

For reference, Fig. 4 is a state graph (showing an eutectic temperature of 437°C) showing the relationship between the temperatures and ratios of aluminum and magnesium.
Such a state graph is described in J.L. Murray, "Binary Alloy Phase Diagrams", vol. 1, 2nd ed., T.B. Massalski, eg., ASM int., 1990, pp. 169 - 71.

The applied pressure condition for shaping utilizing forging is preferably 9.8 x 10³ kN to 88.2 x 10³ kN.

Executing a forging process like that described above will forging-shape the composite billet 20 and also form an eutectic on the boundary between the magnesium portion and the aluminum portion.
The resultant structure is then cooled to obtain the wheel 100. Note that this cooling process is preferably a quenching process using a fan or the like.

The above finishing process includes machining processes such as a spinning process, perforating process, cutting process, and milling process.
In this case, the spinning process is the process of shaping a rim portion by narrowing a spare member 5 of a pre-wheel 100a. The perforating process is the process of forming spoke portions and graphic patterns by perforating holes in the pre-wheel 100a using a machining center. The cutting process is the process of forming a rim portion by cutting the peripheral portion of the pre-wheel 100a with a lathe. The milling process is the process of shaping the wheel by cutting nearly the overall wheel.

Referring back to Fig. 3, the pre-wheel 100a (wheel) is obtained by the above shaping process utilizing forging. The pre-wheel 100a described above includes the spare member 5 extending vertically on the periphery.
In the spinning process, the spare member 5 is spun to be partially narrowed to form the outer rim portion (outer rim) 7 extending in the plane direction of the pre-wheel 100a and an inner rim portion (inner rim) 8 extending vertically from the periphery of the pre-wheel 100a. In this case, a finishing allowance may be formed simultaneously.

Graphic patterns are formed on the pre-wheel 100a, on which the outer portion 7 and inner rim portion 8 are formed, by the perforating process. Cutting the peripheral portion of the pre-wheel 100a by the cutting process will obtain the wheel 100 with the holes 9. In this case, making an aluminum portion extend to the cut portions can achieve a reduction in the weight of the wheel 100. In addition, forming concave and convex portions, holes, and the like can make the wheel 100 have superior design quality. It is possible to apply a chemical surface treatment, plating, shot peening, coating, and the like to the wheel, as needed.
In this manner, the wheel 100 according to the first embodiment is obtained.

In this case, the forging ratio of the wheel 100 according to the first embodiment to the composite billet 20 is preferably 3.5 or more, and more preferably 4 or more. Setting such forging ratio will further reduce the particle size of metal crystal particles of the aluminum portion or magnesium portion, and hence will improve the mechanical strength.
In this case, the forging ratio is a value expressed by "height of composite billet 20 / height of wheel 100".

For example, the wheel 100 is suitably used for vehicle and aircraft wheels. Using this wheel for a vehicle can achieve a reduction in the weight of the automobile, and hence can reduce the environmental load associated with gasoline or the like. This can also achieve a reduction in cost.

### [Second Embodiment]

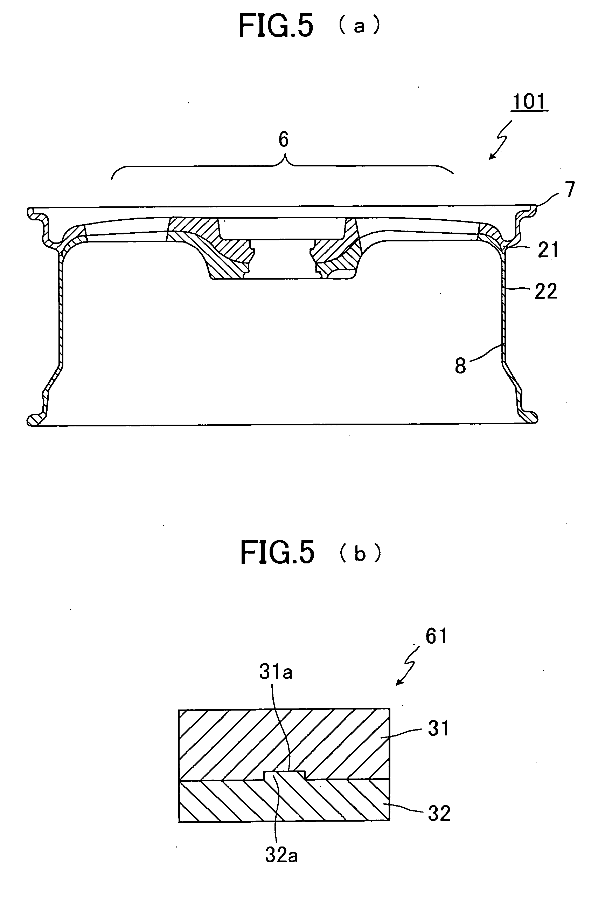

Fig. 5(a) is a sectional view showing the second embodiment of the wheel according to the present invention.
As shown in Fig. 5(a), like the wheel 100 according to the first embodiment, a wheel 101 according to the second embodiment includes a disk portion 6, an outer rim portion 7 coupled to the disk portion 6 and extending in the plane direction of the disk portion 6, and an inner rim portion 8 coupled to the disk portion 6 and extending in a direction perpendicular to the surface of the disk portion 6.

The wheel 101 according to the second embodiment includes an aluminum portion 22 made of an aluminum alloy and a magnesium portion 21 made of a magnesium alloy.
More specifically, the disk portion 6 is a multilayer member of the aluminum portion 22 and the magnesium portion 21. The outer rim portion 7 is formed from the magnesium portion 21. The inner rim portion 8 is formed from the aluminum portion 22. The second embodiment differs in this point from the wheel 100 according to the first embodiment.

As described above, since the wheel 101 according to the second embodiment includes the aluminum portion 22 made of an aluminum alloy and the magnesium portion 21 made of a magnesium alloy which are joined by forging together, it is possible to achieve a reduction in weight owing to the magnesium portion 21 and an improvement in mechanical strength owing to the aluminum portion 22.
It is therefore possible to provide a wheel having excellent mechanical strength in spite of being lightweight.

Like the wheel 100 according to the first embodiment, the wheel 101 described above has an eutectic of aluminum and magnesium formed on the interface between the aluminum portion 22 and the magnesium portion 21.

A method of manufacturing the wheel 101 will be described next. The method of manufacturing the wheel 101 is the same as the method of manufacturing the wheel 100 according to the first embodiment described above.
Fig. 5(b) is a sectional view showing a composite billet in a method of manufacturing a wheel according to the second embodiment
As shown in Fig. 5(b), the method of manufacturing the wheel 101 according to the second embodiment uses a composite billet 61 formed by stacking a disk-like aluminum billet 32 made of aluminum alloy on a disk-like magnesium billet 31 made of magnesium alloy instead of the composite billet 20 in the method of manufacturing the wheel 100 according to the first embodiment. The wheel 101 is obtained by shaping utilizing forging the composite billet 61 according to this embodiment.

In this case, the aluminum billet 32 is provided with a convex portion 32a extending inward from an axial center portion, and the magnesium billet 31 is provide with a concave portion 31a in an axial center portion of one surface.
Fitting the convex portion 32a of the aluminum billet 32 in the concave portion 31a of the magnesium billet 31 will facilitate positioning. In this positioned state, the aluminum billet 32 and the magnesium billet 31 are integrated into the wheel 101 through the above processes. Note that since the convex portion 32a of the aluminum billet 32 is fitted in the concave portion 31a of the magnesium billet 31, there is no chance that the aluminum billet 32 will shift from the magnesium billet 31 in the processes.

According to the manufacturing method of the wheel 101 according to the second embodiment, since the wheel is obtained by shaping utilizing forging the composite billet 61 formed by stacking the aluminum billet 32 made of an aluminum alloy on the magnesium billet 31 made of a magnesium alloy, it is possible to achieve a reduction in weight owing to the magnesium billet 31 and improve the mechanical strength owing to the aluminum portion 32.
It is therefore possible to provide the wheel 101 having excellent mechanical strength in spite of being lightweight.

### [Third Embodiment]

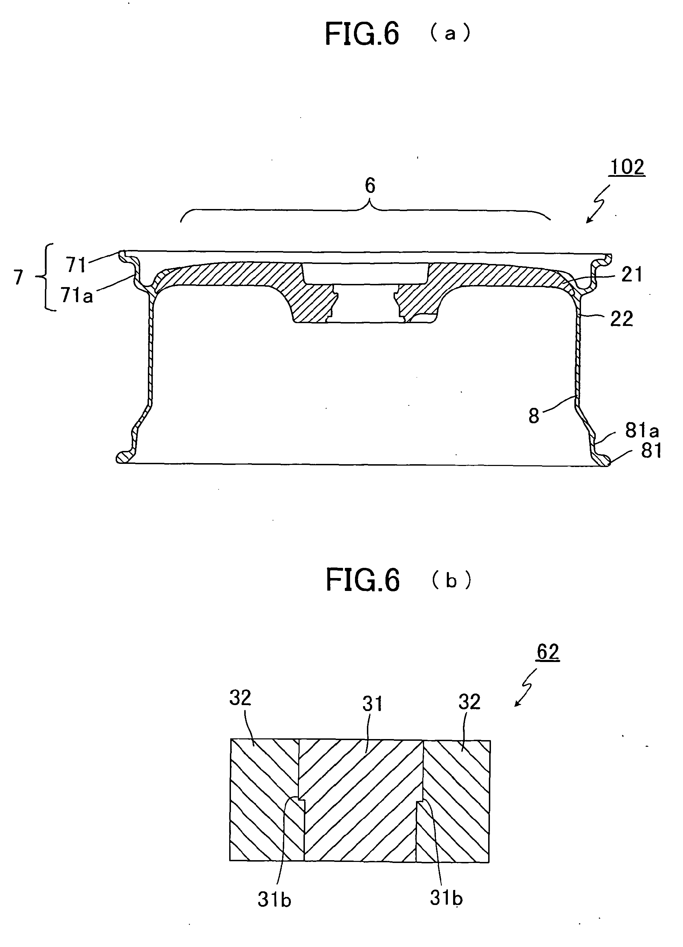

Fig. 6(a) is a sectional view showing the third embodiment of the wheel according to the present invention.
As shown in Fig. 6(a), like the wheel 100 according to the first embodiment, a wheel 102 according to the third embodiment includes a disk portion 6, an outer rim portion 7 coupled to the disk portion 6 and extending in the plane direction of the disk portion 6, and an inner rim portion 8 coupled to the disk portion 6 and extending in a direction perpendicular to the surface of the disk portion 6. However, the pre-wheel has not been subjected to the perforating process of perforating holes with a machining center to form spoke portions and graphic patterns.

The wheel 102 according to the third embodiment includes an aluminum portion 22 made of an aluminum alloy and a magnesium portion 21 made of a magnesium alloy.
More specifically, the disk portion 6 is formed from the magnesium portion 21, and the outer rim portion 7 having an outer beat sheet portion 71a and an outer flange portion 71 and the inner rim portion 8 having an inner beat sheet portion 81a and an inner flange portion 81 are formed from the aluminum portion 22. This embodiment differs in this point from the first embodiment.

As described above, since the wheel 102 according to the third embodiment includes the aluminum portion 22 made of an aluminum alloy and the magnesium portion 21 made of a magnesium alloy which are joined by forging together, it is possible to achieve a reduction in weight owing to the magnesium portion 21 and an improvement in mechanical strength owing to the aluminum portion 22.
It is therefore possible to provide a wheel having excellent mechanical strength in spite of being lightweight.

Like the wheel 100 according to the first embodiment, the wheel 102 described above preferably has an eutectic 23 of aluminum and magnesium formed on the interface between the aluminum portion 22 and the magnesium portion 21.

A method of manufacturing the wheel 102 will be described next. The method of manufacturing the wheel 102 is the same as the method of manufacturing the wheel 100 according to the first embodiment described above.
Fig. 6(b) is a sectional view showing a composite billet in a method of manufacturing a wheel according to the third embodiment
As shown in Fig. 6(b), the method of manufacturing the wheel 102 according to the third embodiment uses a composite billet 62 in which a columnar magnesium billet 31 made of magnesium alloy is contained in a cylindrical aluminum billet 32 made of aluminum alloy instead of the composite billet 20 in the method of manufacturing the wheel 100 according to the first embodiment. The wheel 102 is obtained by shaping utilizing forging the composite billet 62 according to this embodiment.

In the composite billet 62, the surfaces on which the aluminum billet 32 and the magnesium billet 31 come into contact with each other are provided with engaging portions 31b to engage them with each other. Engaging the aluminum billet 32 with the magnesium billet 31 with the engaging portions 31b allows easy positioning. In this positioned state, the aluminum billet 32 and the magnesium billet 31 are integrated into the wheel 102 through the above processes. Note that since the aluminum billet 32 is engaged with the magnesium billet 31 with the engaging portions 31b, there is no chance that the aluminum billet 32 will shift from the magnesium billet 31 in the processes.

According to the manufacturing method of the wheel 102 according to the third embodiment, since the wheel is obtained by shaping utilizing forging the composite billet 62 in which the magnesium billet 31 made of a magnesium alloy is contained in the aluminum billet 32 made of an aluminum alloy, it is possible to achieve a reduction in weight owing to the magnesium billet 31 and improve the mechanical strength owing to the aluminum portion 32.
It is therefore possible to provide the wheel 102 having excellent mechanical strength in spite of being lightweight.

### [Fourth Embodiment]

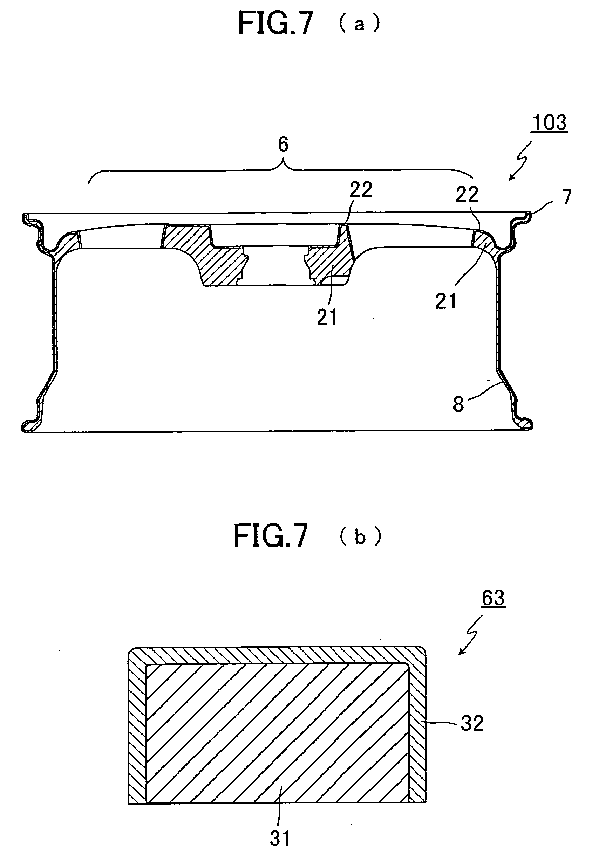

Fig. 7(a) is a sectional view showing the fourth embodiment of the wheel according to the present invention.
As shown in Fig. 7(a), like the wheel 100 according to the first embodiment, a wheel 103 according to the fourth embodiment includes a disk portion 6, an outer rim portion 7 coupled to the disk portion 6 and extending in the plane direction of the disk portion 6, and an inner rim portion 8 coupled to the disk portion 6 and extending in a direction perpendicular to the surface of the disk portion 6.

The wheel 103 according to the fourth embodiment includes an aluminum portion 22 made of an aluminum alloy and a magnesium portion 21 made of a magnesium alloy.
More specifically, one surface of the disk portion 6 is formed from the magnesium portion 21 covered with the aluminum portion 22, one surface of each of the outer rim portion 7 and the inner rim portion 8 is formed from the magnesium portion 21 covered with the aluminum portion 22. That is, this embodiment differs from the wheel 100 according to the first embodiment in that not the entire surface of the magnesium portion is enclosed by the aluminum portion, but only one surface of the magnesium portion is covered with the aluminum portion.

As described above, since the wheel 103 according to the fourth embodiment includes the aluminum portion 22 made of an aluminum alloy and the magnesium portion 21 made of a magnesium alloy which are joined by forging together, it is possible to achieve a reduction in weight owing to the magnesium portion 21 and an improvement in mechanical strength owing to the aluminum portion 22.
It is therefore possible to provide a wheel having excellent mechanical strength in spite of being lightweight.

Like the wheel 100 according to the first embodiment, the wheel 103 described above preferably has an eutectic 23 of aluminum and magnesium formed on the interface between the aluminum portion 22 and the magnesium portion 21.

A method of manufacturing the wheel 103 will be described next. The method of manufacturing the wheel 103 is the same as the method of manufacturing the wheel 100 according to the first embodiment described above.
As shown in Fig. 7(b), a method of manufacturing the wheel 103 according to the fourth embodiment uses a composite billet 63 obtained by fitting a closed-end cylindrical aluminum billet 32 made of an aluminum alloy on a columnar magnesium billet 31 made of a magnesium alloy instead of the composite billet 20 in the method of manufacturing the wheel 100 according to the first embodiment. In this state, the closed-end cylindrical aluminum billet 32 is completely accommodated in the cylindrical magnesium billet 31 made of a magnesium alloy. The composite billet 63 according to this embodiment is forging-shaped into the wheel 103. Note that the composite billet 63 is preferably designed such that the closed-end cylindrical aluminum billet 32 and the columnar magnesium billet 31 are provided with concave and convex portions so as to be fitted together as in the method of manufacturing the wheel 100 according to the first embodiment described above.

According to the manufacturing method of the wheel 103 according to the fourth embodiment, since the wheel is obtained by shaping utilizing forging the composite billet 63 in which the magnesium billet 31 made of a magnesium alloy is contained in the aluminum billet 32 made of an aluminum alloy, it is possible to achieve a reduction in weight owing to the magnesium billet 31 and improve the mechanical strength owing to the aluminum portion 32.
It is therefore possible to provide the wheel 103 having excellent mechanical strength in spite of being lightweight.

### [Fifth Embodiment]

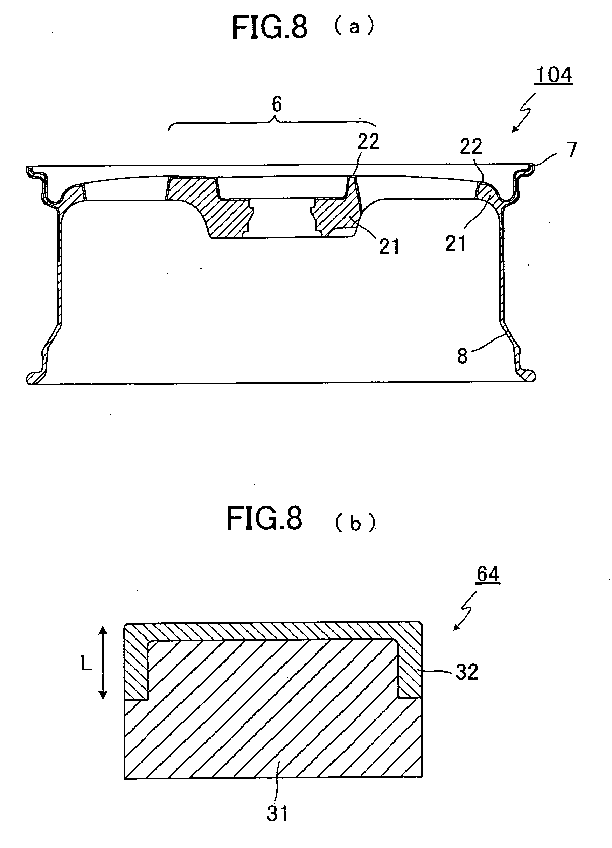

Fig. 8(a) is a sectional view showing the fifth embodiment of the wheel according to the present invention.
As shown in Fig. 8(a), like the wheel 100 according to the first embodiment, a wheel 104 according to the fifth embodiment includes a disk portion 6, an outer rim portion 7 coupled to the disk portion 6 and extending in the plane direction of the disk portion 6, and an inner rim portion 8 coupled to the disk portion 6 and extending in a direction perpendicular to the surface of the disk portion 6.

The wheel 104 according to the fifth embodiment includes an aluminum portion 22 made of an aluminum alloy and a magnesium portion 21 made of a magnesium alloy.
More specifically, the disk portion 6 is formed from the magnesium portion 21 with one surface being covered with the aluminum portion 22, the outer rim portion 7 is formed from the magnesium portion 21 with one surface being covered with the aluminum portion 22, and the inner rim portion 8 is formed from the magnesium portion 21 with one surface being partly covered with the aluminum portion 22. That is, this embodiment differs from the wheel 100 according to the first embodiment in that not the entire surface of the magnesium portion is enclosed by the aluminum portion, but a part of the whole of one surface of the magnesium portion is covered with the aluminum portion.

As described above, since the wheel 104 according to the fifth embodiment includes the aluminum portion 22 made of an aluminum alloy and the magnesium portion 21 made of a magnesium alloy which are joined by forging together, it is possible to achieve a reduction in weight owing to the magnesium portion 21 and an improvement in mechanical strength owing to the aluminum portion 22.
It is therefore possible to provide a wheel having excellent mechanical strength in spite of being lightweight.

Like the wheel 100 according to the first embodiment, the wheel 104 described above preferably has an eutectic 23 of aluminum and magnesium formed on the interface between the aluminum portion 22 and the magnesium portion 21.

A method of manufacturing the wheel 104 will be described next. The method of manufacturing the wheel 104 is the same as the method of manufacturing the wheel 100 according to the first embodiment described above.
As shown in Fig. 8(b), the method of manufacturing the wheel 104 according to the fifth embodiment uses a composite billet 64 which is obtained by fitting a closed-end cylindrical aluminum billet 32 made of an aluminum alloy on a stepped columnar magnesium billet 31 made of a magnesium alloy so as to have a flat side surface, instead of using the composite billet 20 in the method of manufacturing the wheel 100 according to the first embodiment. The wheel 104 is obtained by shaping utilizing forging the composite billet 64 according to this embodiment. Note that the stepped columnar shape indicates a shape obtained by coaxially stacking columns having different diameters. In addition, the composite billet 64 is preferably formed by providing concave and convex portions for the closed-end cylindrical aluminum billet 32 and columnar magnesium billet 31 and fitting them together, as in the method of manufacturing the wheel 100 according to the first embodiment described above.

According to the manufacturing method of the wheel 104 according to the fifth embodiment, since the wheel is obtained by shaping utilizing forging the composite billet 64 in which the magnesium billet 31 made of a magnesium alloy is fitted in the aluminum billet 32 made of an aluminum alloy, it is possible to achieve a reduction in weight owing to the magnesium billet 31 and improve the mechanical strength owing to the aluminum portion 32.
It is therefore possible to provide the wheel 104 having excellent mechanical strength in spite of being lightweight.
The method of manufacturing the wheel 104 according to the fifth embodiment can adjust an area of the magnesium portion of the inner rim portion 8 which is enclosed by the aluminum portion when the wheel is manufactured as a product, by changing a length L of a side wall of the closed-end cylindrical aluminum billet 21.

### [Sixth Embodiment]

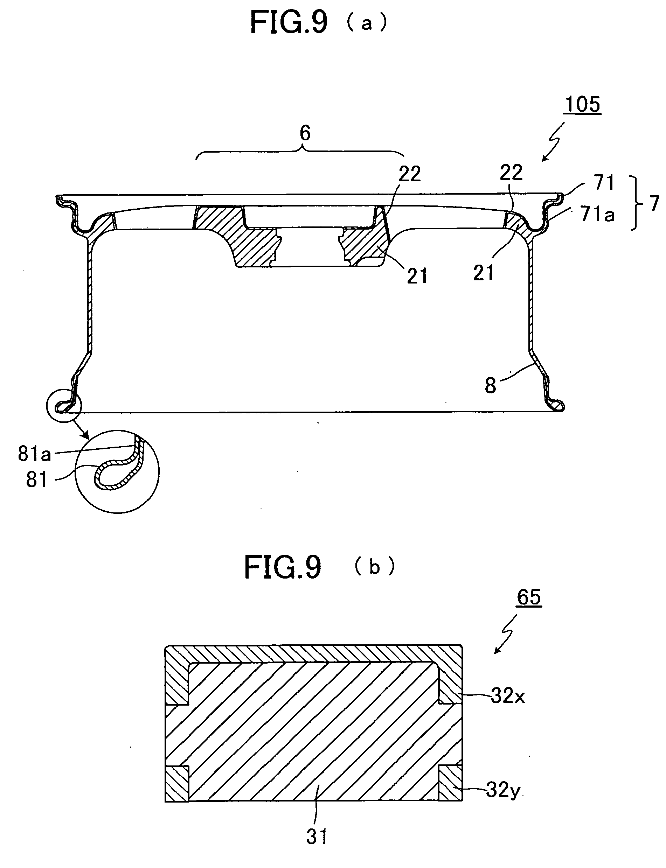

Fig. 9(a) is a sectional view showing the sixth embodiment of the wheel according to the present invention.
As shown in Fig. 9(a), like the wheel 100 according to the first embodiment, a wheel 105 according to the sixth embodiment includes a disk portion 6, an outer rim portion 7 coupled to the disk portion 6 and extending in the plane direction of the disk portion 6, and an inner rim portion 8 coupled to the disk portion 6 and extending in a direction perpendicular to the surface of the disk portion 6.

The wheel 105 according to the sixth embodiment includes an aluminum portion 22 made of an aluminum alloy and a magnesium portion 21 made of a magnesium alloy.
More specifically, the disk portion 6 is formed from the magnesium portion 21 with one surface being covered with the aluminum portion 22, the outer rim portion 7 is formed from the magnesium portion 21 covered with the aluminum portion 22, and the inner rim portion 8 is formed from the magnesium portion 21 with part of one surface and the distal end being covered with the aluminum portion 22. That is, this wheel differs from the wheel 100 according to the first embodiment in that the outer rim portion 7 and the inner rim portion 8 are magnesium portions, and the surface of the outer rim portion 7, an inner beat sheet portion 81a, and an inner flange portion 81 are covered with the aluminum portion 22.

As described above, since the wheel 105 according to the sixth embodiment includes the aluminum portion 22 made of an aluminum alloy and the magnesium portion 21 made of a magnesium alloy which are joined by forging together, it is possible to achieve a reduction in weight owing to the magnesium portion 21 and an improvement in mechanical strength owing to the aluminum portion 22.
It is therefore possible to provide a wheel having excellent mechanical strength in spite of being lightweight.

Like the wheel 100 according to the first embodiment, the wheel 105 described above preferably has an eutectic 23 of aluminum and magnesium formed on the interface between the aluminum portion 22 and the magnesium portion 21.

A method of manufacturing the wheel 105 will be described next. The method of manufacturing the wheel 105 is the same as the method of manufacturing the wheel 100 according to the first embodiment described above.
Fig. 9(b) is a sectional view showing a composite billet in a method of manufacturing a wheel according to the sixth embodiment
As shown in Fig. 9(b), the method of manufacturing the wheel 105 according to the sixth embodiment uses a composite billet 65 which is obtained by downwardly fitting a closed-end cylindrical aluminum billet 32x made of an aluminum alloy on a stepped columnar magnesium billet 31 made of a magnesium alloy and further upwardly fitting a ring-like aluminum billet 32y on the magnesium billet 31 so as to have a flat side surface, instead of using the composite billet 20 in the method of manufacturing the wheel 100 according to the first embodiment. That is, the composite billet 65 has the closed-end cylindrical aluminum billet 32x, stepped columnar magnesium billet 31, and ring-like aluminum billet 32y fitted in the order named. The wheel 105 is obtained by shaping utilizing forging the composite billet 65 according to this embodiment. Note that the stepped columnar shape indicates a shape obtained by coaxially stacking columns having different diameters. In addition, the composite billet 65 is preferably formed by providing concave and convex portions for the closed-end cylindrical aluminum billet 32x and columnar magnesium billet 31 and fitting them together, and providing concave and convex portions for the ring-like aluminum billet 32y and columnar magnesium billet 31 and fitting them together, as in the method of manufacturing the wheel 100 according to the first embodiment described above.

As for the wheel 105, the closed-end cylindrical aluminum billet 32x is used for portions of the surfaces of the disk portion 6 and outer rim portion 7 which are covered with the aluminum portion, and the ring-like aluminum billet 32y is used for portions of the surfaces of the inner beat sheet portion 81a and inner flange portion 81 which are covered with the aluminum portion. Fig. 9(a) is an enlarged view of the inner beat sheet portion 81a and inner flange portion 81 of the inner rim 8.

According to the manufacturing method of the wheel 105 according to the sixth embodiment, since the wheel is obtained by shaping utilizing forging the composite billet 65 in which the magnesium billet 31 made of a magnesium alloy is fitted in the aluminum billet 32 made of an aluminum alloy, it is possible to achieve a reduction in weight owing to the magnesium billet 31 and improve the mechanical strength owing to the aluminum portion 32.
It is therefore possible to provide the wheel 105 having excellent mechanical strength in spite of being lightweight. Note that, the method of manufacturing the wheel 105 according to the sixth embodiment can adjust an area of the magnesium portion of the inner rim portion 8 which is enclosed by the aluminum portion when the wheel is manufactured as a product, by changing a length of a side wall of the closed-end cylindrical aluminum billet 21.

Although the preferred embodiments of the present invention have been described above, the present invention is not limited to them.

For example, a thin film (or powder) made of a metal may be interposed between the aluminum billet 32 and the magnesium billet 31 of the composite billet in the methods of manufacturing the wheels 100, 101, 102, 103, 104, and 105 according to the first to sixth embodiments. Note that the thickness of the metal film to be interposed is preferably 10 µ to 1 mm.
In this case, in a shaping process utilizing forging, an eutectic of aluminum and magnesium can be formed on the interface between the aluminum billet 32 and the magnesium billet 31 even under the condition of a relatively low temperature. This allows to increase the range of temperature conditions at the time of shaping utilizing forging, and hence can ease the processing conditions.

Although the metal to be used is not specifically limited as long as it is other than aluminum and magnesium, it is especially preferable to use copper, zinc, zirconium, or the like.

The aluminum billet 31 and magnesium billet 32 of the wheels 100, 101, 102, 103, 104, and 105 according to the first to sixth embodiments may be either manufactured by casing or manufactured by forging after casting.
When the aluminum billet 31 and the magnesium billet 32 are manufactured by forging after casting, the forging ratio represented by "height of cast billet / height of forged billet" is preferably 3.5 or more.
In this case, at the stage of an aluminum billet or a magnesium billet, the particle size of metal crystal particles is further reduced. Therefore, this reduces the particle size of metal crystal particles of a portion of a wheel which is difficult to forge at the time of shaping the wheel. As a consequence, the mechanical strength further improves.

The composite billet of each of the wheels 100, 101, 102, 103, 104, and 105 according to the first to sixth embodiments has a columnar shape, but may have a polygonal columnar shape.
In addition, the spokes of the wheel 100 according to the first embodiment have a Y-like shape. However, the shape of the spokes is not limited to this. The spokes may have a fan-like shape or X-like shape.

As for the wheel 100 according to the first embodiment, the entire surface of the magnesium portion 21 is enclosed by the aluminum portion 22. Obviously, however, the surface of the magnesium portion 21 need not always be entirely enclosed by the aluminum portion 22 and may be partly enclosed by the aluminum portion 22. In this case, the magnesium portion covered with the aluminum portion is resistant to corrosion.

As for the wheel 100 according to the first embodiment, the shaping process utilizing forging at the time of the manufacture of the wheel includes three steps, namely the first shaping step utilizing forging 21, the second shaping step utilizing forging 22, and the third shaping step utilizing forging 23. However, shaping utilizing forging may performed once or multiple times.
In the third shaping step utilizing forging 23, it is possible to form holes in the wheel without performing any cutting process. That is, the wheel may be manufactured without through the pre-wheel 100a. In this case, an aluminum portion is made to extend to the side surface at the time of the third shaping step utilizing forging 23.

The above wheel is provided with the spare member 5 extending vertically on the periphery of the pre-wheel, which is processed into the outer rim portion 7 and the inner rim portion 8. That is, the above method of manufacturing a wheel uses the pre-wheel and the spare member 5 in an integrated form. However, an outer rim portion and an inner rim portion may be separately manufactured first, and then may be mounted on the wheel.
Separately manufacturing an outer rim portion and an inner rim portion can reduce the forging pressure. In addition, in this case, since the height of the composite billet decreases, the forging ratio can be increased.

More specifically, the following manufacturing methods are available:
(a) discretely forming a disk portion and a rim portion which is formed by integrally forming outer rim portion and inner rim portion, providing annular mount seats for them in advance, and then coupling them together with a plurality of bolts and nuts;
(b) discretely forming a disk portion, separately forming outer rim portion and inner rim portion, and then integrating them in the same manner as described above;
(c) integrally forming an outer rim portion with a disk portion when it is formed, and then coupling a separately formed inner rim portion to the outer rim portion with a plurality of bolts and nuts;
(d) integrally forming an inner rim portion with a disk portion when it is formed, and then coupling a separately formed outer rim portion to the inner rim portion with a plurality of bolts and nuts; and
(e) integrally forming outer rim portion and inner rim portion, as spare members, with a disk portion when it is formed.

Note that it is possible to use, as a coupling method, a method using friction pressure welding, fastening with screws, fastening with rivets, or fastening with Huck bolts with calking members, other than the method using bolts and nuts.

### [Examples]

### (1) Measurement of Tensile Strength of Joined by Forging Portion

A disk-like Al sample formed from an aluminum alloy (Specification Number A6151) and a disk-like Mg sample formed from a magnesium alloy (Specification Number AZ80) were prepared. The Al sample and the Mg sample were then stacked on each other and were pressed by a pressing machine under the temperature condition shown in Table 1 and under an applied pressure of 7,000 MPa, thereby integrating the Al sample and the Mg sample into a test sample by joining utilizing forging.

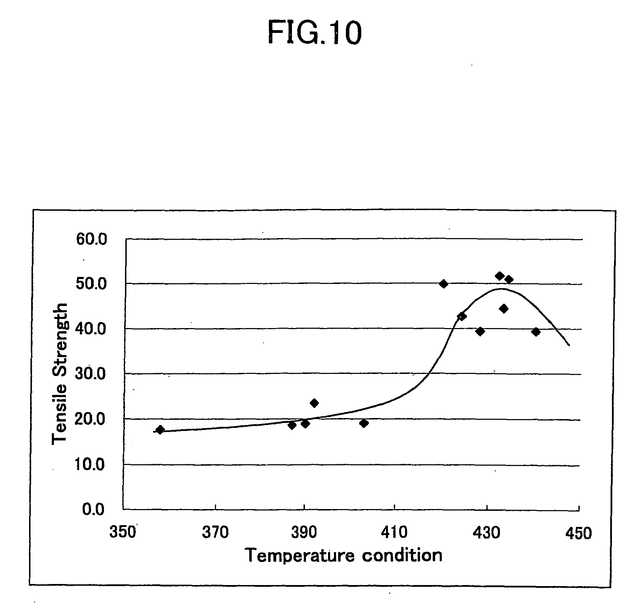

The tensile strength of the joint portion between the Al sample and the Mg sample of the obtained sample was measured according to JIS Z 2241. This operation was repeated a plurality of number of times to calculate an average value. Table 1 shows the obtained result. Fig. 10 is a graph showing the relationship between temperature conditions for joining utilizing forging and the average values of the tensile strengths of joined by forging portions.

**[Table 1]**

| | Temperature | Tensile Strength (MPa) | | | | | |
|---|---|---|---|---|---|---|---|
| | (°C) | First | Second | Third | Fourth | Fifth | Av. |
| Example 1 | 358 | 15.7 | 12.5 | 19.6 | 22.9 | - | 17.7 |
| Example 2 | 387 | 24.2 | 15.7 | 19.8 | 15 | - | 18.7 |
| Example 3 | 390 | 21.2 | 16.7 | - | - | - | 19.0 |
| Example 4 | 392 | 27.1 | 27.4 | 15.7 | - | - | 23.4 |
| Example 5 | 403 | 12.7 | 14.3 | 30.2 | - | - | 19.1 |
| Example 6 | 420 | 55.7 | 56.7 | 37.1 | 52.7 | 46.8 | 49.8 |
| Example 7 | 424 | 40.7 | 52 | 45.5 | 36.2 | 38.9 | 42.7 |
| Example 8 | 428 | 35.5 | 33.2 | - | - | - | 39.4 |
| Example 9 | 432 | 56.6 | 54.5 | 47.7 | 49.8 | 49.8 | 51.7 |
| Example 10 | 433 | 38.5 | 50.3 | - | - | - | 44.4 |
| Example 11 | 434 | 49.8 | 52.1 | - | - | - | 51.0 |
| Example 12 | 440 | 42.2 | 36.6 | 39.2 | - | - | 39.3 |

The results in Table 1 indicate that the tensile strength noticeably improved when temperature conditions for forging were 420°C or more and less than 440°C. This makes it possible to expect that more suitable eutectics are formed at 420°C or more and less than 440°C.

(2) Measurement of Tensile Strength of Joined by Forging Portions with Thin Metal Film Being Interposed between Them
(2-1) A disk-like Al sample formed from an aluminum alloy (Specification Number A6151), a disk-like Mg sample formed from a magnesium alloy (Specification Number AZ80), and a thin Zr film having a thickness of 10 µm were prepared. The Al sample, the thin Zr film, and the Mg sample were then stacked on each other in the order named and were pressed by a pressing machine under the temperature condition shown in Table 2 and under an applied pressure of 7,000 MPa, thereby integrating them into a test sample, with the thin Zr film being interposed between the Al sample and the Mg sample, by joining utilizing forging.

The tensile strength of the joint portion between the Al sample and the Mg sample of the obtained sample was measured according to JIS Z 2241. This operation was repeated a plurality of number of times to calculate an average value. Table 2 shows the obtained result.

**[Table 2]**

| | Temperature | Tensile Strength (MPa) | |
|---|---|---|---|
| | (°C) | First | Second |
| Example 13 | 343 | 68.2 | 67.5 |
| Example 14 | 425 | 43.3 | 37.6 |
| Example 15 | 457 | 26.1 | - |
| Example 16 | 461 | 24.5 | 22.8 |

The results in Table 2 indicate that a sufficient tensile strength was obtained even when the temperature condition for forging was 343°C. This makes it possible to expect that interposing the thin Zr film will form an eutectic even under a low temperature condition for forging.

(2-2) A disk-like Al sample formed from an aluminum alloy (Specification Number A6151), a disk-like Mg sample formed from a magnesium alloy (Specification Number AZ80), and a thin Cu film having the thickness shown in Table 1 were prepared. The Al sample, the thin Cu film, and the Mg sample were then stacked on each other in the order named and were pressed by a pressing machine at 428°C and an applied pressure of 7,000 MPa, thereby integrating them into a test sample, with the thin Cu film being interposed between the Al sample and the Mg sample, by joining utilizing forging.

The tensile strength of the joint portion between the Al sample and the Mg sample of the obtained sample was measured according to JIS Z 2241. This operation was repeated a plurality of number of times to calculate an average value. Table 3 shows the obtained result.

**[Table 3]**

| | Interposed thin film (mm) | Tensile Strength (MPa) | | | |
|---|---|---|---|---|---|
| | | First | Second | Third | Fourth |
| Example 17 | 0.012 | 49.3 | 30.7 | 25.4 | 36.1 |
| Example 18 | 0.1 | 83 | 81.1 | - | - |
| Example 19 | 1 | 82.8 | 88.2 | 25.1 | 44.2 |

The results in Table 3 indicate that an excellent tensile strength was obtained when the thickness of the interposed thin film was 0.1 mm or more. In addition, even when this thickness is 1 mm, the tensile strength does not improve, it is thought that the optimal thickness of the thin Cu film is near 0.1 mm.

### (3) Electron Micrograph of Eutectic

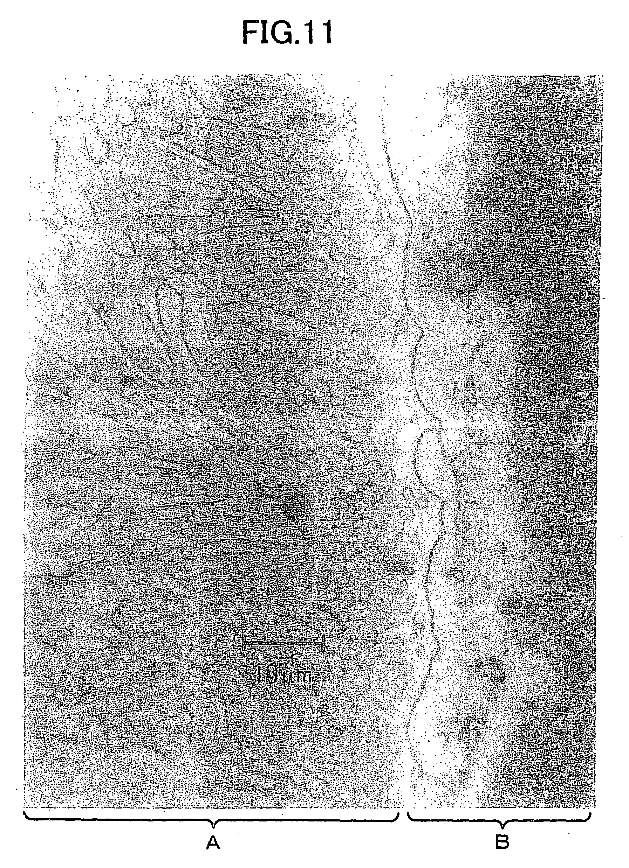

Fig. 11 shows an electron micrograph of the eutectic obtained in the ninth embodiment. That is, Fig. 11 corresponds to the eutectic 23 shown in Fig. 2(b). As shown in Fig. 11, the micrograph shows a crystalline region A of the eutectic and a crystalline region B of the magnesium alloy. As shown in Fig. 11, the eutectic is formed on the boundary between the aluminum alloy and the magnesium alloy, and they are completely integrated without any gaps.

### Industrial Applicability

According to the wheel of the present invention, it is possible to provide a wheel having excellent mechanical strength in spite of being lightweight.
The obtained wheel is suitably used for vehicle and aircraft wheels and the like. Using this wheel for a vehicle can achieve a reduction in the weight of the automobile, and hence can reduce the environmental load associated with gasoline or the like. This can also achieve a reduction in cost.

### Description of Reference Numerals

- 5: spare member
- 6: disk portion
- 6a: hub portion
- 6b: bulb hole
- 7: outer rim portion
- 8: inner rim portion
- 9: hole
- 10: spoke portion
- 20, 61, 62, 63, 64, 65: composite billet
- 21: magnesium portion
- 22: aluminum portion
- 23: eutectic
- 31: magnesium billet
- 31a: concave portion
- 31b: engaging portion
- 32, 32x, 32y: aluminum billet
- 32a: convex portion
- 51: first shaping step utilizing forging
- 52: second shaping step utilizing forging
- 53: third shaping step utilizing forging
- 71: outer flange portion
- 71a: outer beat sheet portion
- 81: inner flange portion
- 81a: inner beat sheet portion
- 100, 101, 102, 103, 104, 105: wheel
- 100a: pre-wheel
- A: crystal region of eutectic
- B: crystal region of magnesium alloy
- P: portion

## Claims

1. A wheel 100 which includes a disk portion 6, an outer rim portion 7, and an inner rim portion 8, comprising
an aluminum portion 22 made of an aluminum alloy and a magnesium portion 21 made of a magnesium alloy,
the aluminum portion 22 and the magnesium portion 21 being integrated by joining utilizing forging.

2. The wheel 100 according to claim 1, wherein an eutectic 23 comprising aluminum and magnesium is formed on an interface between the aluminum portion 22 and the magnesium portion 21.

3. The wheel 100 according to claim 1 or 2, wherein a surface of the magnesium portion 21 is enclosed by the aluminum portion 22.

4. The wheel 100 according to claim 1 or 2, wherein one surface of the magnesium portion 21 is covered with the aluminum portion 22.

5. The wheel 100 according to claim 1 or 2, wherein the disk portion 6 comprises a multilayer member formed from the aluminum portion 22 and the magnesium portion 21, and
an outer rim portion 7 including an outer beat sheet portion 71a and an outer flange portion 71 and an inner rim portion 8 including an inner beat sheet portion 81a and an inner flange portion 81 are magnesium portions 21, and the outer rim portion 7, the inner beat sheet portion 81a, and the inner flange portion 81 are covered with an aluminum portion 22.

6. The wheel 100 according to claim 1 or 2, wherein the disk portion 6 comprises the magnesium portion 21, and
the outer rim portion 7 including an outer beat portion 71a and an outer flange portion 71 and the inner rim portion 8 including an inner beat sheet portion 81a and an inner flange portion 81 comprise the aluminum portion 22.

7. The wheel 100 according to claim 1 or 2, wherein the disk portion 6 is a multilayer member formed from the aluminum portion 22 and the magnesium portion 21,
the outer rim portion 7 comprises the magnesium portion 21, and the inner rim portion 8 comprises the aluminum portion 22.

8. The wheel 100 according to any one of claims 1 to 7, wherein a particle size of metal crystal particles of at least one portion selected from the group consisting of the disk portion 6, the outer rim portion 7, and the inner rim portion 8 is 5 µm to 40 µm.

9. The wheel 100 according to any one of claims 1 to 8, wherein the disk portion 6, the outer rim portion 7, and the inner rim portion 8 are integral.

10. A wheel 100 manufacturing method of shaping utilizing forging a composite billet 20 into a wheel 100 including an aluminum portion 22 made of an aluminum alloy and a magnesium portion 21 made of a magnesium alloy,
wherein the composite billet 20 has a structure in which a columnar magnesium billet 31 made of a magnesium alloy is contained in a closed-end cylindrical aluminum billet 32 made of a pair of opposing aluminum alloys.

11. A wheel 100 manufacturing method of shaping utilizing forging a composite billet 20 into a wheel 100 including an aluminum portion 22 made of an aluminum alloy and a magnesium portion 21 made of a magnesium alloy,
wherein the composite billet 20 has a structure in which a disk-like aluminum billet 32 made of an aluminum alloy is stacked on a disk-like magnesium billet 31 made of a magnesium alloy.

12. A wheel 100 manufacturing method of shaping utilizing forging a composite billet 20 into a wheel 100 including an aluminum portion 22 made of an aluminum alloy and a magnesium portion 21 made of a magnesium alloy,
wherein the composite billet 20 has a structure in which a columnar magnesium billet 31 made of a magnesium alloy is contained in a cylindrical aluminum billet 32 made of an aluminum alloy.

13. A wheel 100 manufacturing method of shaping utilizing forging a composite billet 20 into a wheel 100 including an aluminum portion 22 made of an aluminum alloy and a magnesium portion 21 made of a magnesium alloy,
wherein the composite billet 20 has a structure in which a columnar magnesium billet 31 made of a magnesium alloy is contained in a closed-end cylindrical aluminum billet 32 made of an aluminum alloy.

14. A wheel 100 manufacturing method of shaping utilizing forging a composite billet 20 into a wheel 100 including an aluminum portion 22 made of an aluminum alloy and a magnesium portion 21 made of a magnesium alloy,
wherein the composite billet 20 has a structure in which a stepped columnar magnesium billet 31 made of a magnesium alloy is fitted in a closed-end cylindrical aluminum billet 32 made of an aluminum alloy so as to have a flat side surface.

15. A wheel 100 manufacturing method of shaping utilizing forging a composite billet 20 into a wheel 100 including an aluminum portion 22 made of an aluminum alloy and a magnesium portion 21 made of a magnesium alloy,
wherein the composite billet 20 has a structure in which a stepped columnar magnesium billet 31 made of a magnesium alloy is fitted in a closed-end cylindrical aluminum billet 32 made of an aluminum alloy, and a ring-like aluminum billet 32 is fitted on the magnesium billet 31 so as to have a flat side surface.

16. The wheel 100 manufacturing method according to any one of claims 10 to 15, wherein a particle size of metal crystal particles of the wheel is 5 µm to 40 µm.

17. The wheel 100 manufacturing method according to any one of claims 10 to 16, wherein a surface of the aluminum billet 32 with which the magnesium billet 31 is brought into contact has a surface roughness of not more than 10 µm, and
a surface of the magnesium billet 31 with which the aluminum billet 32 is brought into contact has a surface roughness of not more than 10 µm.

18. The wheel 100 manufacturing method according to any one of claims 10 to 17, wherein a thin film made of a metal other than aluminum and magnesium is interposed between the aluminum billet 32 and the magnesium billet 31.

19. The wheel 100 manufacturing method according to any one of claims 10 to 18, wherein the shaping utilizing forging is performed at a temperature not less than 300°C and a pressure of 9.8 x 10³ kN to 88.2 x 10³ kN.

20. The wheel 100 manufacturing method according to any one of claims 10 to 19, wherein the aluminum billet 32 and/or the magnesium billet 31 is a forged billet.

21. A wheel 100 manufactured by a manufacturing method defined in any one of claims 10 to 20.
